# EUROPEAN PATENT APPLICATION

(11) **EP 3 971 263 A1**
(43) Date of publication of application: **23.03.2022**
(21) Application number: 21767136.1
(22) Date of filing: 21.01.2021
(51) Int. Cl.: C10C 3/02, C01B 32/00

(54) **METHOD FOR PRODUCING IMPREGNATED PITCH**

(30) Priority: 12.03.2020 JP 2020043098
(71) Applicant: Showa Denko K.K., Tokyo 105-8518 (JP)
(72) Inventor: NISHI, Nobuhiro, Oita-shi, Oita 870-0189 (JP); OTA, Keisuke, Oita-shi, Oita 870-0189 (JP); OKUMURA, Yoshikuni, Oita-shi, Oita 870-0189 (JP)
(74) Representative: Strehl Schübel-Hopf & Partner
(86) International application number: PCT/JP2021/002080
(87) International publication number: WO 2021/181905

(57) **Abstract**

Provided is impregnated pitch having a high fixed carbon content despite being petroleum-based pitch. The method for producing impregnated pitch for graphite electrode production according to one embodiment includes heat treatment of ethylene bottom oil and distillation of the heat-treated product to remove low-boiling-point compounds.

## Description

### TECHNICAL FIELD

The present invention relates to a method for producing a petroleum-based impregnation pitch used for the production of a carbon material or a carbon/carbon composite material, such as a graphite electrode.

### BACKGROUND ART

A graphite electrode used in an electric steelmaking arc furnace is produced through various steps of extrusion molding after needle coke is pulverized, classified, blended in a predetermined grain ratio and mixed with a binder pitch; calcination; pitch impregnation (refilling); subsequent re-calcination; and graphitization. The graphite electrode generates an arc from its tip in the electric steelmaking arc furnace, reaches a high temperature exceeding 2000°C, and is used to melt a steel material, etc., to produce an alloy steel.

In a graphite electrode manufacturing process, pitch impregnation and re-calcination operations are carried out several times, in order to maintain high density and high strength of the graphite electrode. These operations are carried out for the purpose of increasing the electrical conductivity and thermal conductivity of the graphite electrode, by bonding aggregates, such as needle coke, and decreasing the porosity of an obtained carbon material thereby increasing the density and strength thereof. Therefore, a pitch used in a pitch refilling step (referred to as "impregnation pitch") is indispensable for the production of a carbon material.

With respect to the impregnation pitch, in view of its purpose,
(1) no quinoline insoluble matter (QI), and
(2) high fixed carbon (FC) content
are important. In particular, when the impregnation pitch contains a quinoline insoluble matter (also referred to as "QI" in the present disclosure), it is difficult to manufacture a dense graphite electrode, since the pitch is less likely to penetrate into fine pores. Further, when the fixed carbon content is low, the amount of components vaporizing during calcination increases so that pores are generated. In order to make up for these, the number of impregnation and re-calcination steps must be increased.

Pitches for a carbon material are largely divided into those using a coal-based material (coal tar) as a raw material and those using a petroleum-based material as a raw material.

Although a coal tar pitch generally has a high fixed carbon content, since a quinoline insoluble matter is present in coal tar which is a raw material, a step of removing the quinoline insoluble matter is necessary for use as an impregnation pitch.

For example, in Patent Literature 1, a quinoline insoluble matter is removed from a raw material pitch by a centrifugal separation method, and a light oil is distilled off to produce an impregnation pitch containing 0.1 to 1% of the quinoline insoluble matter.

Further, recently proposed is a technique for producing an impregnation pitch having a content of a quinoline insoluble matter of less than 0.1% by mass by heat-treating a coal tar pitch, extracting in a coal tar-based tar middle oil and filtering the heat-treated coal tar pitch to obtain a filtrate, distilling the filtrate and separating and removing the tar oil (Patent Literature 2).

In any case, since a step of removing a quinoline insoluble matter from a pitch is necessary, it is economically disadvantageous.

On the other hand, a petroleum-based pitch as described in Patent Literature 3 does not contain a quinoline insoluble matter in a raw material. However, it is generally known that the fixed carbon content of a petroleum-based pitch is significantly lower than that of a coal tar-based pitch.

### [CITATION LIST]

### [PATENT LITERATURE]

[PTL 1] JP S61-168691 A
[PTL 2] JP 2004-285130 A
[PTL 3] JP S52-54721 A

### SUMMARY OF INVENTION

### [TECHNICAL PROBLEM]

It is an object of the present invention to provide an impregnation pitch having a high fixed carbon content despite being a petroleum-based pitch.

### [SOLUTION TO PROBLEM]

As a result of intensive studies, the present inventors have found that, by subjecting an ethylene bottom oil to a heat treatment and removing a low boiling point component by distillation, a petroleum-based impregnation pitch containing no quinoline insoluble matter and having a high fixed carbon content can be obtained.

That is, the present invention relates to the following [1] to [8].
[1] A method for producing an impregnation pitch for the production of a graphite electrode comprising subjecting an ethylene bottom oil to a heat treatment and distilling the heat-treated product to remove a low boiling point substance.
[2] The method for producing an impregnation pitch according to [1], wherein the content of a quinoline insoluble matter of the heat-treated product is 0.5% by mass or less.
[3] The method for producing an impregnation pitch according to [1] or [2], wherein the temperature of the heat treatment is in the range of 360°C to 450°C.
[4] The method for producing an impregnation pitch according to any one of [1] to [3], wherein the treatment period at the heat treatment temperature is 0.5 to 36 hours.
[5] The method for producing an impregnation pitch according to any one of [1] to [4], wherein the amount of the low boiling point substance removed by the distillation is 20 to 80% by mass based on the ethylene bottom oil.
[6] The method for producing an impregnation pitch according to any one of [1] to [5], wherein the softening point of the impregnation pitch produced is 70°C to 130°C, and the fixed carbon content thereof is 45% by mass or more.
[7] The method for producing an impregnation pitch according to any one of [1] to [6], wherein the method does not comprise a step of removing the quinoline insoluble matter.
[8] A method for producing a graphite electrode comprising a kneading step, a forming step, a calcination step, an impregnation step, a re-calcination step, a graphitization step, and a processing step, wherein the impregnation pitch obtained by the method described in any one of [1] to [7] is used as an impregnation pitch in the impregnation step.

### [ADVANTAGEOUS EFFECTS OF INVENTION]

According to the present invention, it is possible to obtain a petroleum-based impregnation pitch which does not require a step of removing a quinoline insoluble matter which is carried out in the production of a coal tar pitch, has a high fixed carbon content, and has a desired softening point.

### DESCRIPTION OF EMBODIMENTS

Hereinafter, preferred embodiments of the present invention will be described, but it should be understood that the present invention is not limited to these embodiments only, and various applications can be made within the spirit and practice of the present invention.

### <Manufacturing process of graphite electrode>

An example of a process for manufacturing a graphite electrode will be described below.

### 1. Kneading step

A step of mixing needle coke and a binder pitch together and kneading them

### 2. Forming step

A step of forming the kneaded product by extrusion or the like to obtain a cylindrical formed body

### 3. Calcination step

A step of calcining the formed body to obtain a calcined body

### 4. Impregnation step

A step of filling the calcined body with an impregnation pitch

### 5. Re-calcination step

A step of re-calcining the filled calcined body to obtain a re-calcined body

### 6. Graphitization step

A step of graphitizing the re-calcined body

### 7. Processing step

A step of forming the graphitized body into a predetermined shape by cutting or the like to form a graphite electrode

### 1. Kneading step

Needle coke, which is pulverized, classified, and blended in a predetermined grain ratio, and a binder pitch are mixed together and kneaded. The blending amount of the binder pitch is about 20 to 30 parts by mass with respect to 100 parts by mass of the needle coke. The binder pitch is not particularly limited as long as it forms a paste by mixing with the needle coke. For example, a petroleum-based pitch, a coal-based pitch, or a coal tar pitch can be used.

The kneaded product may include iron oxide. Iron oxide has an effect of suppressing puffing.

A commercially available mixing apparatus or stirrer can be used for mixing and kneading. Specific examples thereof include a mixing apparatus and a kneading apparatus, such as a mixer and a kneader. The preferred kneading temperature is around 150°C, and then the kneaded product is cooled to a temperature suitable for forming (100 to 130°C).

### 2. Forming step

The kneaded product is formed by extrusion or the like to obtain a cylindrical formed body having a predetermined size.

### 3. Calcination step

The formed body of the previous step is heated and calcined at 700°C to 1000°C to obtain a calcined body. The calcination step is preferably carried out in a combustion exhaust gas non-oxidizing atmosphere. The formed body softens at the initial stage of a temperature rise, a large amount of decomposition gas is generated by thermal decomposition and polycondensation of the binder pitch at 200 to 500°C, and the formation of pores and volume shrinkage occur. The binder pitch carbonizes at 500 to 600°C. The calcination step often requires about one month including cooling.

### 4. Impregnation step

In the calcination step, the binder pitch generally loses 35 to 45% of its mass as a volatile matter. At this time, a large number of pores are generated in the calcined body. The impregnation step is to fill the pores with the impregnation pitch. The impregnation is carried out, for example, by placing the calcined body in an autoclave, degassing under reduced pressure, injecting a molten impregnation pitch, and injecting the impregnation pitch into the pores at a gas pressure of around 1 MPa at about 200°C.

### 5. Re-calcination step

The filled calcined body is re-calcined to obtain a re-calcined body. The re-calcination can also be carried out under the same conditions as in the calcination step. The impregnation step and the re-calcination step may be repeated, if necessary.

### 6. Graphitization step

The re-calcined body is placed in a furnace surrounded by an insulating material (Acheson furnace, LWG furnace, etc.), and subjected to a heat treatment by resistance heat generation of packing coke or the re-calcined body by energization. The temperature of graphitization is 2000 to 3000°C. This temperature is necessary to convert amorphous carbon in the re-calcined body into crystalline graphite. In order to convert the re-calcined body into graphite, the heat treatment is preferably carried out for several days.

### 7. Processing step

The graphitized body is formed into a graphite electrode product having a predetermined shape by machining, such as cutting.

### <Method for producing impregnation pitch>

A method for producing an impregnation pitch according to one embodiment includes at least two steps, i.e., a heat treatment step of heat-treating an ethylene bottom oil, and a distillation step of removing a low boiling point substance from the heat-treated ethylene bottom oil to produce an impregnation pitch having a desired fixed carbon content and softening point.

In the present disclosure, the fixed carbon content refers to a value measured by a measurement method according to the "Method of determination of fixed carbon content" of JIS K 2425:2006, and the softening point refers to a value measured according to the "Measuring method for softening point of tar pitch (ring and ball method)" of JIS K 2425:2006. The QI amount refers to a value measured according to the "Method of determination of quinoline-insoluble content in tar pitch" of JIS K 2425:2006.

### (Ethylene bottom oil)

In the petrochemical industry, in general, naphtha and the like are thermally decomposed at a high temperature, and the obtained thermally decomposed product is distilled and separated into fractions of aliphatic compounds, such as ethylene, propylene, and other olefins; aromatic compounds, such as benzene, toluene, and xylene; decomposed kerosene, decomposed gasoline, etc., to obtain products. Among these fractions, a heavy fraction having the highest boiling point is referred to as an "ethylene bottom oil", which is used, for example, in a raw material of carbon black, etc., and as a fuel.

Since a thermal decomposition plant for naphtha and the like is often referred to as an ethylene plant, the aforementioned heavy fraction is referred to as an ethylene bottom oil. A thermal decomposition plant for naphtha is sometimes referred to as a naphtha cracker.

In one embodiment, as the ethylene bottom oil, in addition to an ethylene bottom oil obtained by thermal decomposition of naphtha, it is also possible to use an ethylene bottom oil obtained by thermal decomposition of a raw material further containing at least one selected from the group consisting of kerosene, light oil, and natural gas liquid in addition to naphtha. Natural gas liquid (NGL) is a high boiling point liquid component obtained at the time of collecting natural gas, and is a "generic name of liquid hydrocarbons separated and recovered from natural gas produced from underground through a well" (Petroleum and Natural Gas Resources Information Dictionary, https://oilgas-info.jogmec.go.jp/termlist/1001289/1001313.html).

In the present disclosure, a raw material containing at least naphtha and, in some cases, further containing at least one selected from the group consisting of kerosene, light oil and natural gas liquid is referred to as a naphtha-containing raw material. When a raw material further containing at least one selected from the group consisting of kerosene, light oil and natural gas liquid in addition to naphtha is used as the naphtha-containing raw material, the content of the total of kerosene, light oil and natural gas liquid may be 1 to 99% by mass with respect to 100% by mass of the naphtha-containing raw material. Since a naphtha-containing raw material having a high content of the above total contains a large amount of at least one selected from the group consisting of kerosene, light oil and natural gas liquid, which are cheaper than naphtha, this naphtha-containing raw material is superior in economic efficiency as compared with a naphtha-containing raw material having a low content of the above total. On the other hand, from the naphtha-containing raw material having a high content of the above total, there has been a case where a large amount of ethylene bottom oil, which is a heavy oil and limited in its application, is obtained, and an application thereof is problematic. However, since the method for producing an impregnation pitch according to one embodiment effectively utilizes an ethylene bottom oil, even the naphtha-containing raw material having a high content of the above total can be used without any problems as a raw material for thermal decomposition. The total ratio of kerosene, light oil and natural gas liquid in the naphtha-containing raw material is sometimes referred to as a raw material diversification rate.

The properties of the ethylene bottom oil obtained by thermal decomposition of the naphtha-containing raw material depend on the type of the naphtha-containing raw material, thermal decomposition conditions, operating conditions of a purification distillation tower, etc., and in general, are those in which a 50% distillation temperature is 200 to 350°C, an aromatic carbon content is 50% by mass or more, a flash point is 70 to 90°C, and a kinematic viscosity at 100°C is less than 10 mm2/s. However, since the ethylene bottom oil is a mixture of hydrocarbon compounds, the above values may vary to some extent.

### (Heat treatment step)

The purpose of this step is to increase the degree of polymerization of the ethylene bottom oil and to increase the fixed carbon content of an obtained impregnation pitch.

As the ethylene bottom oil to be subjected to this step, an ethylene bottom oil obtained from an ethylene plant may be used as it is, or an ethylene bottom oil from which a part of a low boiling point substance is removed by distillation may be used. Hereinafter, they are collectively referred to as an "ethylene bottom oil". The distillation method may be any of atmospheric distillation, reduced-pressure distillation (vacuum distillation), and a combination of atmospheric distillation and reduced-pressure distillation, and is appropriately selected.

The ethylene bottom oil does not contain QI, but QI may be generated by the heat treatment thereof. The QI amount of the heat-treated product of the ethylene bottom oil is preferably 0.5% by mass or less, and more preferably 0.1% by mass or less. It is still more preferable that the heat-treated product be substantially free of QI (e.g., 0.05% by mass or less, or 0.01% by mass or less).

The heat treatment temperature is preferably 360 to 450°C, more preferably 370 to 430°C, and still more preferably 380 to 400°C. When the temperature is 360°C or higher, the degree of polymerization of the pitch is moderately increased. On the other hand, when the temperature is 450°C or lower, QI is less likely to be generated.

The heat treatment period is preferably 0.5 hours to 36 hours, more preferably 3 hours to 30 hours, and still more preferably 5 hours to 24 hours, from the time of arriving at a predetermined heat treatment temperature. When the heat treatment period is 0.5 hours or more, the degree of polymerization is moderately increased. When the heat treatment period is 36 hours or less, generation of QI due to excessive heat treatment and coking on the inner surface of a sealed vessel are less likely to occur.

Hereinafter, a specific method in the case where the heat treatment of the ethylene bottom oil is carried out using a sealed vessel will be exemplified. First, the ethylene bottom oil is introduced into a sealed vessel, such as an autoclave. The atmosphere of the gas phase is not particularly limited, and may be a nitrogen gas atmosphere, a mixed gas atmosphere of hydrogen gas and a lower alkane, such as methane and ethane, or a mixed gas atmosphere of nitrogen gas, hydrogen gas, and a lower alkane, such as methane and ethane. The initial pressure is preferably 0 MPaG, but is not particularly limited thereto.

Next, the ethylene bottom oil in the sealed vessel is heated from room temperature to a predetermined heat treatment temperature, and a heat treatment is carried out for a predetermined period. There is no limitation on the rate of temperature rise. However, when the rate of temperature rise is excessively high and the surface temperature of the inner wall of the sealed vessel is significantly higher than the predetermined internal temperature of the ethylene bottom oil, excessive heat treatment on the inner wall of the sealed vessel causes coking and generation of QI, which are not preferable.

The pressure in the sealed vessel is increased by hydrogen gas generated by thermal decomposition during the heat treatment, and a lower alkane, such as methane and ethane. There is no limitation on this pressure, which may be lowered as necessary.

### (Distillation step)

This step is a step of removing a low boiling point substance by distillation from the heat-treated product of the ethylene bottom oil obtained in the heat treatment step, to produce an impregnation pitch having a desired softening point and fixed carbon content.

The distillation method may be any of atmospheric distillation, reduced-pressure distillation (vacuum distillation), and a combination of atmospheric distillation and reduced-pressure distillation, and is appropriately selected.

It is preferable that the internal temperature of a distillation apparatus not exceed 360°C. When the temperature is 360°C or lower, it is possible to suppress generation of QI by a reaction, such as polymerization, and coking on the inner wall of the distillation apparatus. On the other hand, although the lower limit temperature does not affect the pitch characteristics, it is preferably 200°C or higher in terms of economic efficiency, since the distillation pressure must be lowered in order to distill off a low boiling point substance when the temperature is low. The low boiling point substance means a component which vaporizes under the temperature and pressure conditions of the distillation step, and is a collection of many kinds of chemical species.

When the distillation is carried out under reduced pressure, the pressure at the time of distillation is preferably 100 to 10,000 Pa, more preferably 500 to 3,000 Pa, and still more preferably 800 to 2,000 Pa. Thus, it is possible to obtain an impregnation pitch having a softening point of 70°C to 130°C.

The softening point of the impregnation pitch can be controlled by the removal amount of the low boiling point substance. In general, the larger the removal amount of the low boiling point substance is, the higher the softening point is, and the smaller it is, the lower the softening point is. In order to obtain an impregnation pitch having a softening point of 70 to 130°C, the removal amount of the low boiling point substance is preferably 20 to 80% by mass, more preferably 40 to 70% by mass, and most preferably 50 to 70% by mass of the ethylene bottom oil. However, the preferred removal amount may vary depending on the composition of the raw material.

### <Impregnation pitch>

The softening point of the impregnation pitch is preferably 70°C to 130°C, more preferably 80°C to 120°C, and still more preferably 90°C to 110°C. When the softening point is 70°C or higher, in the re-calcination step after the impregnation, the impregnated pitch is likely to be maintained in the calcined body. When the softening point is 130°C or lower, an impregnation rate to the calcined body and impregnation properties of the impregnation pitch can be improved.

The higher fixed carbon content of the impregnation pitch is preferable, since the density of a graphite electrode can be increased. The fixed carbon content of the impregnation pitch is preferably 45% by mass or more. When the fixed carbon content is 45% by mass or more, the number of repetitions of the impregnation and re-calcination steps in order to increase the density of a graphite electrode can be reduced.

There is a positive correlation between the softening point and the fixed carbon content, and when the softening point is high, the fixed carbon content also tends to be high. By appropriately controlling the removal amount of the low boiling point substance in the distillation step, the fixed carbon content of the impregnation pitch can be set to 45% by mass or more.

By appropriately selecting the conditions of the heat treatment and the distillation, it is possible to obtain an impregnation pitch substantially free of QI, so that the need for a QI removal step can be eliminated.

### EXAMPLES

Although the present invention will be further described with reference to the following Examples and Comparative Examples, these examples illustrate the present invention by way of example only, and the present invention is not limited to these examples.

### Example 1

550 g of an ethylene bottom oil was introduced into a SUS autoclave with a capacity of 1.0 L. The autoclave was sealed under a nitrogen gas atmosphere, and the inside of the vessel was heated to 380°C at a rate of 4°C/min while stirring. After 24 hours had elapsed from the temperature rise, the mixture was allowed to cool to room temperature, and the heat-treated product was collected. By using a reduced pressure distillation apparatus, distillation of the heat-treated product was carried out at 1,000 Pa and a liquid temperature of 240°C in a distillation kettle to distill off a low boiling point component, and thus an impregnation pitch sample 1 was obtained as a high boiling point component in an amount of 237 g (yield: 43%). The removal amount of the low boiling point substance was 57% by mass of the ethylene bottom oil.

### Example 2

550 g of an ethylene bottom oil was introduced into a SUS autoclave with a capacity of 1.0 L. The autoclave was sealed under a nitrogen gas atmosphere, and the inside of the vessel was heated to 380°C at a rate of 4°C/min while stirring. After 8 hours had elapsed from the temperature rise, the mixture was allowed to cool to room temperature, and the heat-treated product was collected. By using a reduced pressure distillation apparatus, distillation of the heat-treated product was carried out at 1,000 Pa and a liquid temperature of 257°C in a distillation kettle to distill off a low boiling point component, and thus an impregnation pitch sample 2 was obtained as a high boiling point component in an amount of 199 g (yield: 36%). The removal amount of the low boiling point substance was 64% by mass of the ethylene bottom oil.

### Comparative Example 1

By using a reduced pressure distillation apparatus, distillation of 250 g of an ethylene bottom oil was carried out at 2,000 Pa and a liquid temperature of 240°C in a distillation kettle to distill off a low boiling point component, and thus an impregnation pitch sample 3 was obtained as a high boiling point component in an amount of 110 g (yield: 44%). The removal amount of the low boiling point substance was 56% by mass of the ethylene bottom oil.

### Comparative Example 2

550 g of an ethylene bottom oil was introduced into a SUS autoclave with a capacity of 1.0 L. The autoclave was sealed under a nitrogen gas atmosphere, and the inside of the vessel was heated to 380°C at a rate of 4°C/min while stirring. After the temperature was raised, a heat treatment was carried out for 24 hours. After a lapse of 24 hours, the mixture was allowed to cool to room temperature, and a heat-treated product sample 4 was collected (yield: 94.1%).

### Comparative Example 3

A sample 5 was an ethylene bottom oil without a heat treatment and distillation.

### Comparative Example 4

The data of a coal tar derived impregnation pitch provided by JFE Chemical Corporation are shown in Table 1.

The measurement data of the Examples and Comparative Examples are shown in Table 1. In the Examples, within the softening point range required for an impregnation pitch, even in the absence of a QI removal step, the QI is 0% by mass, and the fixed carbon content maintains a value around 50% by mass.

**Table 1**

| | Sample | Heat treatment step | Distillation step | Softening point [°C] | Fixed carbon content [% by mass] | QI [% by mass] | The presence of QI removal step |
|---|---|---|---|---|---|---|---|
| Ex. 1 | Sample 1 | 380°C 24 hr | 1,000 Pa 240°C | 93.2 | 49.1 | 0.0 | No |
| Ex. 2 | Sample 2 | 380°C 8 hr | 1,000 Pa 257°C | 118.7 | 51.8 | 0.0 | No |
| Comp. Ex. 1 | Sample 3 | None | 2,000 Pa 240°C | 93.8 | 26.7 | 0.0 | No |
| Comp. Ex. 2 | Sample 4 | 380°C 24 hr | None | - | 22.5 | 0.0 | No |
| Comp. Ex. 3 | Sample 5 | None | None | - | 12.0 | 0.0 | No |
| Comp. Ex. 4 | - | - | - | 70-90 | 48≤ | ≤0.3 | Yes |

### INDUSTRIAL APPLICABILITY

The present invention can eliminate a step of removing a quinoline insoluble matter, which is indispensable in the conventional production of an impregnation pitch for the production of a graphite electrode, and thus is industrially useful.

## Claims

1. A method for producing an impregnation pitch for the production of a graphite electrode comprising subjecting an ethylene bottom oil to a heat treatment and distilling the heat-treated product to remove a low boiling point substance.

2. The method for producing an impregnation pitch according to claim 1, wherein the content of a quinoline insoluble matter of the heat-treated product is 0.5% by mass or less.

3. The method for producing an impregnation pitch according to claim 1 or 2, wherein the temperature of the heat treatment is in the range of 360°C to 450°C.

4. The method for producing an impregnation pitch according to any one of claims 1 to 3, wherein the treatment period at the heat treatment temperature is 0.5 to 36 hours.

5. The method for producing an impregnation pitch according to any one of claims 1 to 4, wherein the amount of the low boiling point substance removed by the distillation is 20 to 80% by mass based on the ethylene bottom oil.

6. The method for producing an impregnation pitch according to any one of claims 1 to 5, wherein the softening point of the impregnation pitch produced is 70°C to 130°C, and the fixed carbon content thereof is 45% by mass or more.

7. The method for producing an impregnation pitch according to any one of claims 1 to 6, wherein the method does not comprise a step of removing the quinoline insoluble matter.

8. A method for producing a graphite electrode comprising a kneading step, a forming step, a calcination step, an impregnation step, a re-calcination step, a graphitization step, and a processing step, wherein the impregnation pitch obtained by the method described in any one of claims 1 to 7 is used as an impregnation pitch in the impregnation step.
